# FASCICULE DE BREVET EUROPEEN

(11) **EP 0 648 661 B1**
(45) Date de publication et mention de la délivrance du brevet: **17.03.1999**
(21) Numéro de dépôt: 94402308.4
(22) Date de dépôt: 14.10.1994
(51) Int. Cl.: B62D 1/04, B60R 21/05, B62D 1/10, F16B 21/16, B29C 45/16

(54) **Volant de direction pour véhicules automobiles, pièce de montage et colonne de direction adaptées à coopérer avec ce volant, et procédé pour la fabrication de celui-ci**
Lenkrad für Kraftfahrzeuge, an dieses Lenkrad angepasstes Montagestück und Lenksäule und Verfahren zu dessen Herstellung
Steering wheel for motor vehicles, mounting piece and steering column adopted to cooperate with this steering wheel, and process for its fabrication

(30) Priorité: 15.10.1993 FR 9312304; 19.11.1993 FR 9313852
(43) Date de publication de la demande: 19.04.1995
(73) Titulaire: GERSTEEN exerçant ses activités sous la dénomination ISODELTA, F-86190 Vouille (FR)
(72) Inventeur: Geron, Jean, F-86190 Chire-en-Montreuil (FR); Hallard, Alain, F-86170 Cisse (FR)
(74) Mandataire: Rinuy, Santarelli

(56) Documents cités:
- EP-A- 0 002 074
- EP-A- 0 105 535
- EP-A- 0 465 824
- EP-A- 0 488 618
- WO-A-91/07289
- DE-A- 1 555 225
- DE-A- 1 917 334
- DE-A- 2 714 959
- GB-A- 516 078
- AUTOMOTIVE ENGINEERING, vol.99, no.5, Mai 1991, WARRENDALE US page 29 MICHAEL SCARPATI, BARI W. BROWN, RICHARD P. HARRISON, BLAIR J. ZAGATA 'Water-blown integral skin foam for steering wheels'
- PATENT ABSTRACTS OF JAPAN vol. 11, no. 238 (M-613) 5 Août 1987 & JP-A-62 050 271 (TOYODA GOSEI CO LTD) 4 Mars 1987 & JP-A-62 050 271 (TOYODA GOSEI CO LTD)
- IBM TECHNICAL DISCLOSURE BULLETIN, vol.27, no.12, Mai 1985, NEW YORK, US pages 6820 - 6821 ANONYMOUS 'Automated Assembly Clip'

## Description

L'invention concerne les volants de direction de véhicules automobiles, du type défini dans le préambule de la revendication 1.

On connaît déjà par EP-A-0.105.535 un tel volant qui comporte un moyeu, des bras solidaires par leur extrémité interne du moyeu, une jante solidaire de l'extrémité externe des bras, un corps de déformation disposé sur le moyeu, des éléments de contact électrique montés élastiquement vis-à-vis respectivement de l'un et l'autre des bras et d'une plaque fixée au moyeu ou à l'un des bras, ainsi qu'une couche de mousse intégrale de polyuréthanne qui enrobe l'ensemble des éléments précités. Cette couche de mousse intégrale de polyuréthanne est formée d'une peau en polyuréthanne microporeuse et d'un coeur en polyuréthanne moussé.

L'invention vise un volant qui soit simple, commode et économique, tant à la fabrication qu'à l'assemblage, y compris dans le cas où il doit intégrer, comme dans le volant antérieur précité, des équipements complémentaires tels qu'un module choc-tête, voire un module air-bag.

Elle propose à cet effet un volant de direction pour véhicules automobiles, comportant une armature, un enrobage dans lequel est disposée ladite armature, une couche externe qui revêt ledit enrobage, et en outre un corps central, présentant une face avant, et solidaire en périphérie dudit enrobage dans lequel sont disposés la jante et les branches de ladite armature ; caractérisé en ce que ladite une couche externe revêt en continu ladite face avant du corps central et ledit enrobage.

Selon des caractéristiques préférées :
- ledit corps central et ledit enrobage sont en thermoplastique relativement rigide, et ladite couche externe en thermoplastique relativement souple,
- ledit enrobage et ledit corps central sont en thermoplastique relativement rigide, et ladite couche externe en mousse de polyuréthane,
- il comporte un module air-bag porté par ledit corps central,
- il comporte un module choc-tête porté par ledit corps central,
- ledit module choc-tête comporte un moyen absorbeur d'énergie formé par des éléments plats déformables,
- ledit module choc-tête comporte un moyen absorbeur d'énergie formé par un bloc de matière cellulaire,
- il comporte au moins un contacteur électrique porté par ledit corps central,
- il comporte une armature périphérique disposée dans ledit enrobage et une armature centrale présentant un moyeu et des branches solidarisées par l'arrière aux branches de l'armature périphérique,
- il comporte une coque arrière,
- ladite coque arrière comporte une trappe d'accès latéral permettant la mise en place d'une pièce de montage permettant d'assujettir le moyeu du volant à une colonne de direction,
- ladite coque arrière comporte des trappes d'accès permettant la mise en place d'un élément de montage permettant d'assujettir un module porté par ledit corps central aux dites branches,
- le corps central adhère en périphérie à l'enrobage de la jante et des branches,
- le corps central est surmoulé en périphérie par l'enrobage de la jante et des branches,
- le corps central et l'enrobage de la jante et des branches sont moulés d'une seule pièce.

Sous un deuxième aspect, l'invention vise un procédé pour mouler ledit corps central et ladite couche externe d'un volant où le corps central adhère en périphérie à l'enrobage de la jante et des branches, dans lequel :
- on place la jante et les branches préalablement enrobées, dans un moule adapté à l'obtention dudit corps central dans une première matière, et à l'obtention d'une portion inférieure de la couche externe, située sous le plan de joint, dans une deuxième matière ;
- on injecte dans ledit moule lesdites première et deuxième matières ;
- on change le demi-moule supérieur par un autre demi-moule supérieur adapté, en coopération avec le demi-moule inférieur dans lequel reste l'ensemble précédemment obtenu, à l'obtention dans ladite deuxième matière du reste de ladite couche externe, située au-dessus du plan de joint ; et
- on injecte ladite deuxième matière.

Des objets, caractéristiques et avantages de l'invention ressortent de la description qui suit, donnée à titre d'exemple non limitatif, en regard des dessins annexés sur lesquels :
- la figure 1 est une coupe schématique partielle d'un volant conforme à l'invention ;
- la figure 2 est une perspective d'une pièce de montage permettant d'assujettir le moyeu de ce volant à la colonne de direction ;
- la figure 3 est une vue en plan montrant comment la pièce de montage coopère la colonne de direction ;
- la figure 4 est une vue en plan de l'armature métallique périphérique de ce volant ;
- la figure 5 montre cette armature noyée dans un enrobage en matière thermoplastique ;
- la figure 6 est une vue en élévation-coupe de cette armature enrobée sur laquelle adhère la portion inférieure de la couche externe et le corps central du volant, la coupe étant prise suivant un plan correspondant à celui montré en A-A sur la figure 5 ;
- la figure 7 est une vue similaire, mais avec la couche externe complétée par sa portion supérieure ;
- les figures 8 et 9 montrent d'une façon similaire les étapes suivantes de l'assemblage du volant, dans une variante où la fixation du module air-bag est plus complète ;
- la figure 10 montre d'une façon similaire l'armature métallique centrale et la coque arrière du volant pré-assemblées, dans une variante ou le volant est prévu pour être fixé sur une colonne de direction classique ;
- les figures 11 et 12 sont des vues en élévation-coupe de l'armature périphérique enrobée, montrant des variante de réalisation de son enrobage, la coupe étant prise suivant un plan correspondant à celui repéré en A-A sur la figure 5 ;
- la figure 13 est une vue en plan d'une autre variante de réalisation où l'enrobage de l'armature périphérique et le corps central du volant sont moulés d'une seule pièce ;
- la figure 14 est la vue en élévation-coupe prise suivant le plan repéré en XIV-XIV sur la figure 13 ;
- la figure 15 est une vue similaire, mais pour une variante où le corps central est surmoulé en périphérie par l'enrobage ;
- la figure 16 montre l'ensemble de la figure 15 revêtu par une couche externe en polyuréthane expansé moulée d'une seule pièce ; et
- les figures 17 et 18 sont des vues similaires à la figure 8, mais dans des variantes où le module air-bag est remplacé par un module choc-tête.

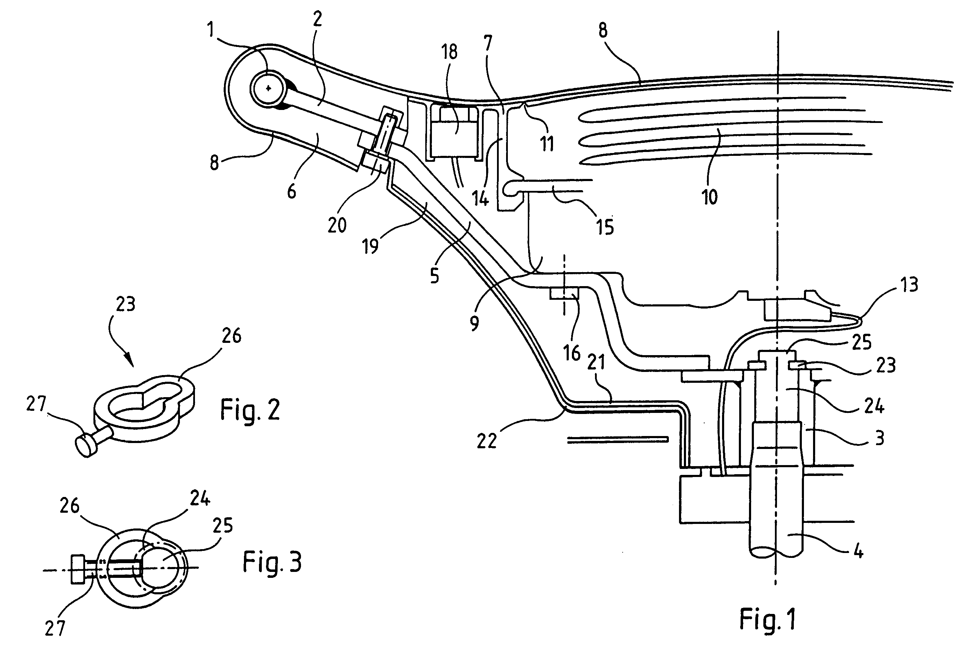

Le volant illustré sur la figure 1 est muni d'une armature métallique divisée en une armature périphérique et en une armature centrale.

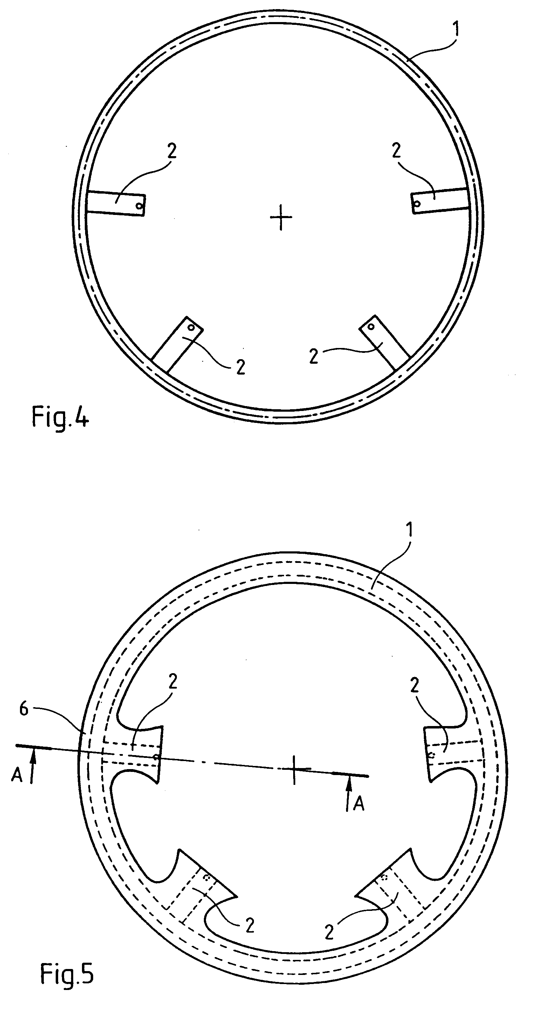

L'armature périphérique (voir également la figure 4) comporte une jante 1 formée par un tube métallique annulaire, par exemple en acier, et de courtes branches 2 par exemple en acier soudé ou surmoulées en aluminium.

L'armature centrale comporte un moyeu 3 de montage sur la colonne de direction 4, et des branches 5 pour relier le moyeu 3 à chacune des branches 2.

L'armature périphérique est noyée dans un enrobage 6 (voir également la figure 5) en thermoplastique injecté relativement rigide, cet enrobage étant solidaire d'un corps central 7 également en thermoplastique injecté relativement rigide, l'enrobage 6 et le corps 7 étant recouverts extérieurement par une couche de surface 8 uniforme et continue, également en thermoplastique injecté, mais plus souple, par exemple d'une dureté de 24 shore A.

Un module air-bag est prévu à l'intérieur du volant, en son centre, le boîtier métallique 9 contenant le générateur de gaz étant fixé aux branches 5 et au corps 7, le sac gonfable plié 10 étant installé entre le boîtier 9 et une paroi que comporte le corps 7 en son centre, des points de faiblesse 11 (dont un seul est montré sur le dessin) étant prévus dans cette paroi de sorte que l'association de celle-ci et de la couche de surface 8 qui la recouvre forme pour le sac 10 un couvercle capable de s'ouvrir de la façon voulue pour laisser passer le sac lorsque celui-ci se gonfle brutalement à la suite de la mise à feu du générateur de gaz contenu dans le boîtier 9 en réponse à un signal électrique émis par un détecteur de choc et transmis par le câble 13.

Dans l'exemple illustré, le corps 7 comporte autour de la paroi centrale qui forme le couvercle d'air-bag, une collerette 14 transversale à cette paroi, et dont la base présente une lèvre où peut s'encliqueter un bourrelet 15 du boîtier 9, cet encliquetage procurant la fixation entre le boîtier 9 et le corps 7 ; et les branches 5 présentent un épaulement sur lequel prend appui la périphérie de la base du boîtier 9, des vis 16 étant prévues pour assujettir le boîtier 9 sur les branches 5.

En outre du module air-bag, le corps 7 porte un contacteur électrique 18, par exemple pour l'avertisseur, dont le bouton peut être enfoncé par simple pression sur la couche de surface 8 à l'emplacement correspondant.

A l'arrière du volant, entre le moyeu 3 et l'enrobage 6, est prévue une coque rapportée 19, fixée ici grâce aux vis 20 qui servent à solidariser les branches 5 et les branches 2, c'est-à-dire l'armature centrale et l'armature périphérique. La coque arrière 19 est en thermoplastique injecté, avec une couche interne 21 relativement rigide, comme l'enrobage 6 et le corps 7, et une couche externe 22 plus souple, comme la couche 8.

D'une façon générale, les couches externes 8 et 22 procurent un toucher du volant qui est plus confortable que si l'on était directement en contact avec une matière rigide, le caractère élastique du thermoplastique souple étant utile pour procurer les déformations permettant d'actionner les contacteurs tels que 18, et pour que la partie centrale formant couvercle d'air-bag ait le comportement voulu lors de l'ouverture, le fait que la couche externe en thermoplastique soit appliquée sur un élément lui-même en thermoplastique garantissant une parfaite adhérence entre ceux-ci.

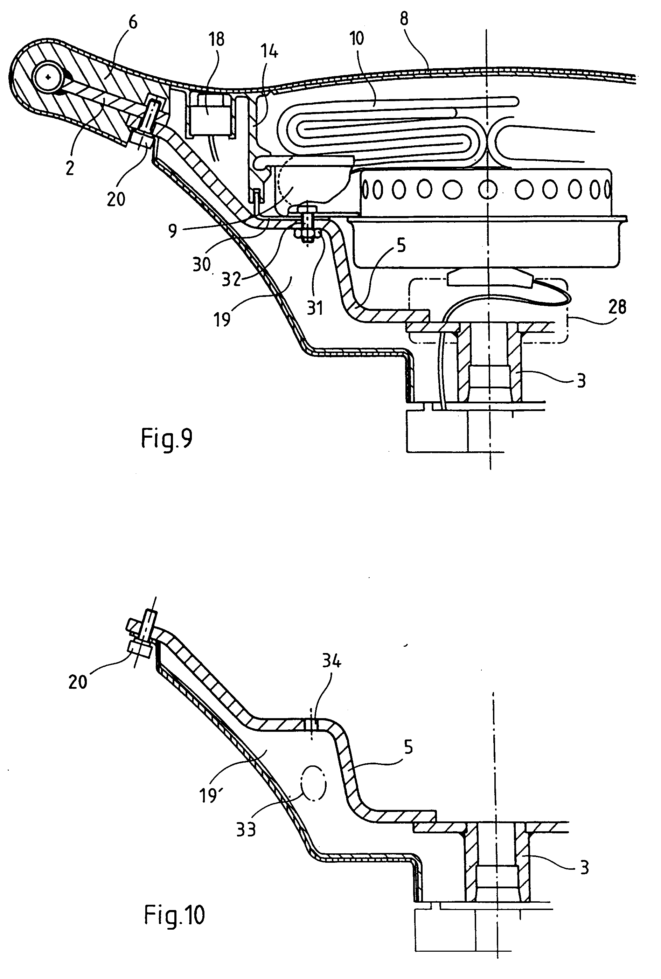

Pour permettre le montage du volant sur la colonne 4, il est prévu dans la coque 19 une trappe 28 (voir figure 9) qui permet d'accéder latéralement au sommet du moyeu 3 pour mettre en place l'élément 23 qui sert à l'assujettir à la colonne 4.

Dans l'exemple illustré, le sommet de cette dernière est configuré avec une embase conique et des cannelures classiques, l'extrémité n'étant pas filetée mais présentant après le tronçon 24 prévu pour être entouré par le moyeu, un tronçon 25 de plus petit diamètre, une gorge étant ménagée à la base du tronçon 25.

La pièce de montage 23 (voir figures 2 et 3) comporte une bague 26 dont le contour intérieur suit deux portions de cercle dont la plus grande est au diamètre du tronçon 25 de la colonne 4, et la plus petite au diamètre de la gorge située à la jonction entre les tronçons 24 et 25. La pièce 23 comporte également, à l'opposé de la partie ayant le plus petit diamètre, une vis de serrage 27.

La pièce 23 est mise en place en faisant glisser sa partie interne à plus grand diamètre le long du tronçon 25, jusqu'à ce qu'elle repose sur le dessus du tronçon 24, on fait alors glisser la pièce 23 parallèlement à elle-même de sorte que sa partie à plus petit diamètre rentre dans la gorge située au pied du tronçon 25, et on serre alors la vis 27 qui vient porter contre un plat prévu dans la gorge 25, jusqu'à ce que la pièce 23 soit solidement maintenue en position. Bien entendu, comme montré sur la figure 1, le dessous de la pièce 23 porte sur le dessus du moyeu 3 tandis que le dessus de la pièce 23 porte sur la paroi supérieure de la gorge ménagée au pied du tronçon 25.

Pour permettre un serrage le long de l'axe de la colonne 4, on peut prévoir une légère pente sur le dessus et/ou le dessous de la pièce 23.

Pour faciliter le montage de la pièce 23, on peut fournir celle-ci avec une vis 27 reliée par une zone sécable à une tige coaxiale, cette tige permettant d'aller mettre en place la pièce 23 comme indiqué ci-dessus, y compris pour effectuer le serrage de la vis 27, à l'issue duquel on enlève la tige en brisant la zone sécable.

On va maintenant décrire à l'appui des figures 4 à 9 un procédé pour obtenir le volant montré sur la figure 1.

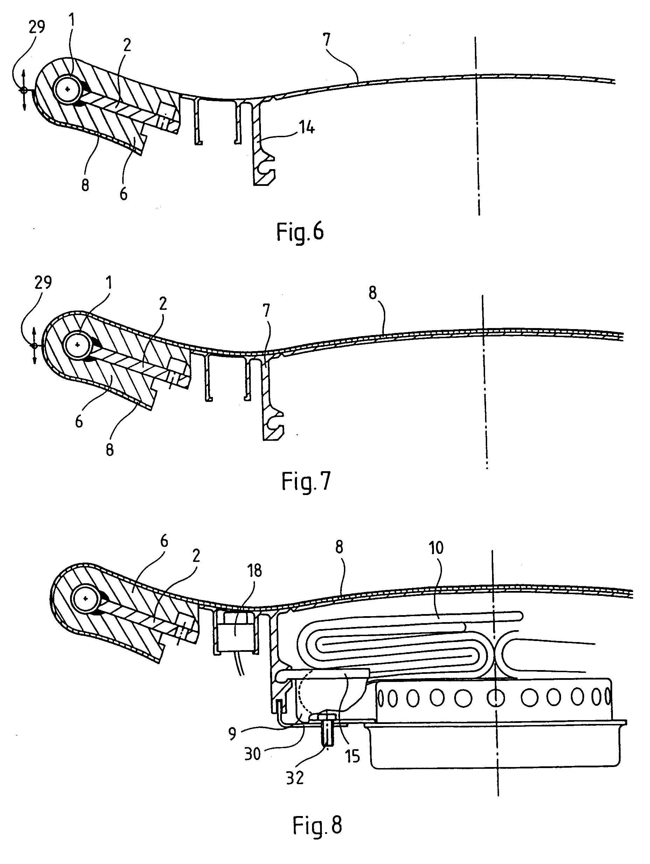

Après avoir préparé l'armature périphérique, c'est-à-dire la jante 1 associée aux branches 2, on la surmoule pour obtenir l'enrobage 6, comme montré sur la figure 5. On place ensuite l'ensemble obtenu dans un moule adapté à l'obtention du corps 7 dans un thermoplastique relativement dur, et à l'obtention de la portion inférieure de la couche externe 8, c'est-à-dire de la portion située sous le plan de joint montré par le symbole 29 sur les figures 6 et 7, dans un thermoplastique relativement souple. On injecte alors dans ce moule les deux sortes de thermoplastique, et l'on obtient donc l'ensemble montré sur la figure 6, les différents thermoplastiques qui forment l'enrobage 6, le corps central 7 et la portion inférieure de la couche externe 8 étant choisis pour qu'il y ait une parfaite adhérence entre la périphérie du corps 7 et l'enrobage 6, et entre ce dernier et la couche 8.

Tout en gardant l'ensemble montré sur la figure 6 dans le demi-moule inférieur (celui qui se trouve sous le plan de joint) on change le demi-moule supérieur pour un autre qui est adapté, en coopération avec le demi-moule inférieur, à l'obtention du reste de la couche externe 8, puis on injecte celle-ci dans le même thermoplastique souple que sa partie inférieure.

On met ensuite en place dans le corps 7 le ou les contacteur(s) 18 ainsi que le module air-bag, ces mises en place se faisant par simple encliquetage dans l'exemple illustré sur les figures 1, 6 et 7.

Dans la variante montrée sur la figure 8, on met également en place des équerres de renforcement 30 entre le boîtier 9 et la base de la collerette 14 dans laquelle une rainure est ménagée à cet effet.

On vient ensuite monter l'armature métallique centrale (moyeu 3 et branches 5) sur le boîtier 9 grâce aux vis 16 (mode de réalisation de la figure 1) ou aux écrous 31 coopérant avec les vis 32 (mode de réalisation des figures 8 et 9), puis on met en place la coque arrière 19 et on serre les vis 20, ce qui termine l'assemblage du volant.

La coque arrière 19 peut comporter, pour chaque vis 20, afin de la masquer, un couvercle moulé en même temps que la couche 22, et relié au reste de la coque 19 par une partie formant charnière. La coque 19 peut également comporter un couvercle similaire mais de plus grandes dimensions pour fermer la trappe d'accès latéral 28 prévue pour le montage du volant sur la colonne de direction.

En variante, dans le cas où l'on désire monter le volant selon l'invention sur une colonne de direction classique, c'est-à-dire avec un filetage où on met en place un écrou qui porte sur le dessus du moyeu 3, on met en place l'ensemble montré sur la figure 10, qui comporte l'armature métallique centrale solidarisée par les vis 20 à une coque arrière 19', similaire à la coque 19, mais où la trappe 28 est remplacée par des trappes 33 situées chacune à l'aplomb du trou 34 ménagé dans les branches 5 pour le passage de la vis 16 ou 32, et on termine le montage du volant en venant positionner sur cet ensemble, qui forme la partie inférieure du volant, l'ensemble montré sur la figure 8, qui forme la partie supérieure du volant, on serre les vis 20 qui se mettent en place dans les branches 2, et grâce aux trappes 33, on met en place les écrous 31 ou les vis 16.

Dans chacune des deux possibilités de montage du volant exposées ci-dessus, on prévoit de préférence des moyens d'indexation entre les branches 2 et 5, et également entre ces dernières branches et la coque arrière, pour garantir que le volant assemblé soit centré dans toutes les directions.

Dans des variantes non représentées de l'armature métallique du volant, la jante est réalisée en profil plein plutôt qu'en tube, ce profil étant en acier ou en alliage léger, les branches 2 pouvant être en acier et liées à la jante par un surmoulage en aluminium, et l'on peut également prévoir que l'ensemble de l'armature périphérique 1, 2 est en aluminium moulé.

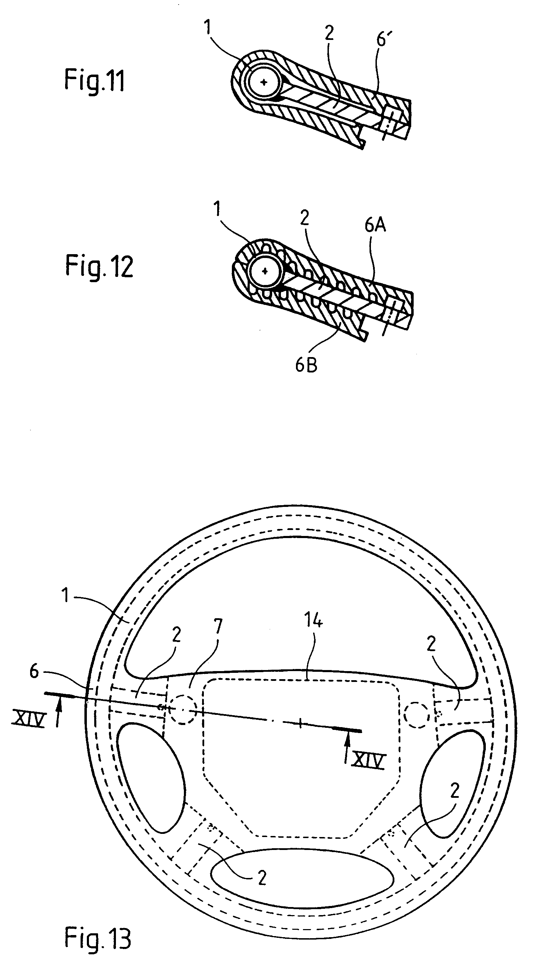

De nombreuses variantes sont également possible pour l'enrobage 6, il peut notamment être réalisé avec injection de gaz afin d'économiser de la matière et d'alléger le volant, comme l'enrobage 6' montré sur la figure 11, ou être réalisé dans une autre matière qu'un thermoplastique, par exemple une matière cellulaire telle que de la mousse de polyuréthane expansé, ou encore être réalisé par deux demi-coquilles 6A et 6B fabriquées séparément puis assemblées l'une à l'autre en prenant en sandwich l'armature périphérique, les demi-coquilles pouvant être en thermoplastique alvéolé, en thermoplastique expansé ou en mousse de polyuréthane expansé.

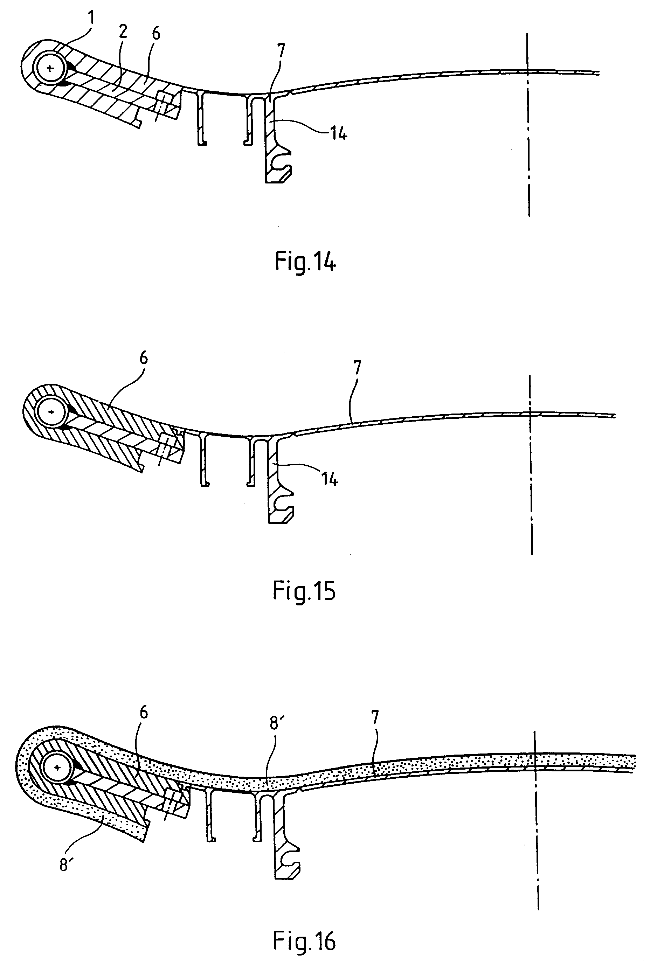

Dans la variante montrée sur les figures 13 et 14, l'enrobage 6 et le corps central 7 sont en thermoplastique relativement rigide et sont obtenus dans la même opération d'injection, c'est-à-dire qu'ils sont moulés d'une seule pièce.

Dans la variante montrée sur la figure 15, le corps central 7 est pré-existant, et comporte une périphérie à section en T qui est surmoulée par l'enrobage 6.

De nombreuses autres variantes sont possibles pour rendre l'enrobage 6 et la périphérie du corps 7 solidaires, c'est-à-dire assemblés par construction, de manière définitive (indémontable).

Dans la variante montrée sur la figure 16, la couche externe 8' est moulée d'une seule pièce, et est réalisée en une mousse de polyuréthane adaptée à adhérer sur le thermoplastique relativement rigide avec lequel sont faits le corps central 7 et l'enrobage 6.

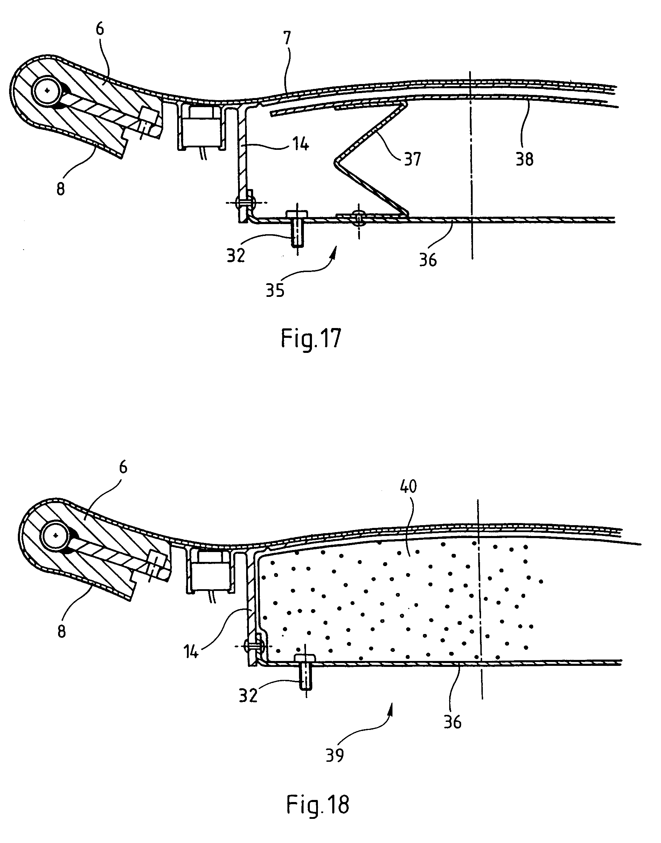

Dans la variante montrée sur la figure 17, le module air-bag est remplacé par un module choc-tête 35 qui est assemblé par rivetage sur la collerette 14. Le module 35 comporte une plaque de réaction 36 qui coopère avec les branches 5 d'une manière similaire au boîtier 9 du module air-bag, et un moyen absorbeur d'énergie, formé par des éléments plats déformables, ici un élément 37 à section en M dont la base est rivetée sur la plaque 36 et le sommet solidarisé à une plaque 38 de répartition d'énergie qui se trouve sous la partie centrale de la paroi avant du corps 7.

Dans le module 35, les plaques 36 et 38 ainsi que l'élément 37 sont en métal. En variante, on peut utiliser des éléments similaires en matière plastique, et donner à ces éléments plats d'autres formes convenant pour absorber l'énergie.

Dans la variante montrée sur la figure 18, le module choc-tête 39 comporte au-dessus de la plaque de réaction 36 un simple bloc 40 de matière cellulaire, ici de la mousse de polyuréthane expansé.

On voit que la fixation du module interne au volant, respectivement vis à vis du corps central 7 et vis à vis de l'armature du volant, peut se faire de nombreuses façons. Ainsi, l'assemblage entre le module et le corps central 7 se fait par simple encliquetage dans le mode de réalisation montré sur la figure 1, des éléments de renfort complémentaires 30 sont prévus dans le mode de réalisation des figures 8 et 9, tandis que dans les variantes des figures 17 et 18, le module est fixé au corps central 7 par rivetage, et l'on peut également, en fonction des circonstances utiliser des boulons ou d'autres moyens de fixation. En ce qui concerne la fixation du module sur l'armature métallique du volant, on a prévu dans chacun des exemples illustrés, de prendre appui sur un épaulement des branches 5 et de parfaire la fixation avec des vis, mais au lieu de prévoir que la base du module prend directement appui sur un épaulement de l'armature, il est possible de compléter cette dernière par des pièces intermédiaires (en anglais : brackets) disposées entre les branches, et sur lesquelles prend appui le module, ces pièces pouvant être conformées de sorte que l'on peut fixer le module avec moins de vis que le volant ne comporte de branches, ce qui rend plus rapide l'assemblage du volant.

Il est également possible de prévoir un module comportant des pattes de fixation arrière qui s'étendent jusqu'au point de jonction entre les branches 2 et 5, de sorte que les vis 20 servent également à la fixation du module sur l'armature métallique du volant.

Dans les exemples illustrés, le contacteur 18 est porté par le corps central 7, mais il est également possible de le faire porter par l'armature métallique du volant, par exemple grâce à une pièce de liaison solidaire des branches 5. Les contacteurs que l'on prévoit dans le volant selon l'invention peuvent servir non seulement à actionner l'avertisseur sonore, mais aussi un régulateur de vitesse ou un autoradio.

On peut également fixer la coque arrière 19 ou 19' de façon différente, par exemple par rivetage ou par simple encliquetage. On peut d'ailleurs utiliser la coque arrière pour lui faire porter des composants électriques, notamment la filerie, des raccords, ou le contacteur rotatif illustré à sa base sur les dessins, qui est du type en ressort de montre.

Dans le cas où le module installé dans le volant est un air-bag, la partie du corps central 7 qui le surplombe, et qui va donc s'ouvrir lors du gonflage du ballon 10, peut être renforcée si nécessaire par un filet ou par des sangles.

Dans d'autres variantes, le module air-bag est remplacé par tout autre module qu'il peut être utile de disposer à l'intérieur du volant, ou bien on ne prévoit aucun module à sa place.

Dans ce dernier cas, l'armature intérieure 3, 5 et la coque arrière 19 sont directement assemblées avec les vis 20 après mise en place des contacteurs 18, au cas où le volant en comporte.

On rappelle que l'invention ne se limite pas aux exemples décrits et représentés.

## Revendications

1. Volant de direction pour véhicules automobiles, comportant une armature, un enrobage dans lequel est disposée ladite armature, une couche externe qui revêt ledit enrobage, et en outre un corps central, présentant une face avant, et solidaire en périphérie dudit enrobage dans lequel sont disposés la jante et les branches de ladite armature ; caractérisé en ce que ladite une couche externe (8 ; 8') revêt en continu ladite face avant du corps central (7) et ledit enrobage (6 ; 6' ; 6A, 6B).

2. Volant selon la revendication 1, caractérisé en ce que ledit corps central (7) et ledit enrobage (6 ; 6' ; 6A, 6B) sont en thermoplastique relativement rigide, et ladite couche externe (8) en thermoplastique relativement souple.

3. Volant selon la revendication 1, caractérisé en ce que ledit enrobage (6 ; 6' ; 6A, 6B) et ledit corps central (7) sont en thermoplastique relativement rigide, et ladite couche externe (8') en mousse de polyuréthane.

4. Volant selon l'une quelconque des revendications 1 ou 3, caractérisé en ce qu'il comporte un module air-bag (9, 10) porté par ledit corps central (7).

5. Volant selon l'une quelconque des revendications 1 à 3, caractérisé en ce qu'il comporte un module choc-tête (35 ; 39) porté par ledit corps central (7).

6. Volant selon la revendication 5, caractérisé en ce que ledit module choc-tête (35) comporte un moyen absorbeur d'énergie formé par des éléments plats déformables (37, 38).

7. Volant selon la revendication 5, caractérisé en ce que ledit module choc-tête (39) comporte un moyen absorbeur d'énergie formé par un bloc (40) de matière cellulaire.

8. Volant selon l'une quelconque des revendications 1 à 7, caractérisé en ce qu'il comporte au moins un contacteur électrique (18) porté par ledit corps central (7).

9. Volant selon l'une quelconque des revendications 1 à 8, caractérisé en ce qu'il comporte une armature périphérique (1, 2) disposée dans ledit enrobage et une armature centrale (3, 5) présentant un moyeu (3) et des branches (5) solidarisées par l'arrière aux branches (2) de l'armature périphérique.

10. Volant selon l'une quelconque des revendications 1 à 9, caractérisé en ce qu'il comporte une coque arrière (19, 19').

11. Volant selon la revendication 10, caractérisé en ce que ladite coque arrière (19) comporte une trappe d'accès latéral (28) permettant la mise en place d'une pièce de montage (23) permettant d'assujettir le moyeu (3) du volant à une colonne de direction (4).

12. Volant selon la revendication 10, caractérisé en ce que ladite coque arrière (19') comporte des trappes d'accès (33) permettant la mise en place d'un élément de montage permettant d'assujettir un module (9, 10 ; 35 ; 39) porté par ledit corps central (7) aux dites branches (5).

13. Volant selon l'une quelconque des revendications 1 à 12, caractérisé en ce que le corps central (7) adhère en périphérie à l'enrobage (6) de la jante et des branches.

14. Volant selon l'une quelconque des revendications 1 à 12, caractérisé en ce que le corps central (7) est surmoulé en périphérie par l'enrobage (6) de la jante et des branches.

15. Volant selon l'une quelconque des revendications 1 à 12, caractérisé en ce que le corps central (7) et l'enrobage (6) de la jante et des branches sont moulés d'une seule pièce.

16. Procédé pour mouler ledit corps central (7) et ladite couche externe (8) d'un volant selon la revendication 13, caractérisé en ce que :
- on place la jante (1) et les branches (2) préalablement enrobées, dans un moule adapté à l'obtention dudit corps central (7) dans une première matière, et à l'obtention d'une portion inférieure de la couche externe (6), située sous le plan de joint (29), dans une deuxième matière ;
- on injecte dans ledit moule lesdites première et deuxième matières ;
- on change le demi-moule supérieur par un autre demi-moule supérieur adapté, en coopération avec le demi-moule inférieur dans lequel reste l'ensemble précédemment obtenu, à l'obtention dans ladite deuxième matière du reste de ladite couche externe (8), située au-dessus du plan de joint (29) ; et
- on injecte ladite deuxième matière.

## Claims

1. Steering wheel for motor vehicles, having a frame, a cladding in which said frame is disposed, one external layer which coats said cladding, and in addition a central body, having a front face, and joined at the periphery with said cladding in which the rim and arms of the said frame are disposed; characterised in that said one external layer (8; 8') continuously coats said front face of the central body (7) and said cladding (6; 6'; 6A, 6B).

2. Steering wheel according to Claim 1, characterised in that said central body (7) and said cladding (6; 6'; 6A, 6B) are made from a relatively rigid thermoplastic, and said external layer (8) from a relatively soft thermoplastic.

3. Steering wheel according to Claim 1, characterised in that said cladding (6; 6'; 6A, 6B) and said central body (7) are made from a relatively rigid thermoplastic, and said external layer (8') from a polyurethane foam.

4. Steering wheel according to either one of Claims 1 or 3, characterised in that it has an air bag module (9, 10) carried by said central body (7).

5. Steering wheel according to any one of Claims 1 to 3, characterised in that it has a head-impact module (35; 39) carried by said central body (7).

6. Steering wheel according to Claim 5, characterised in that said head-impact module (35) has an energy absorbing means formed by deformable flat elements (37, 38).

7. Steering wheel according to Claim 5, characterised in that said head-impact module (39) has an energy absorbing means formed by a block (40) of cellular material.

8. Steering wheel according to any one of Claims 1 to 7, characterised in that it has at least one electrical contactor (18) carried by said central body (7).

9. Steering wheel according to any one of Claims 1 to 8, characterised in that it has a peripheral frame (1, 2) disposed in said cladding and a central frame (3, 5) having a hub (3) and arms (5) fixed at the rear to the arms (2) of the peripheral frame.

10. Steering wheel according to any one of Claims 1 to 9, characterised in that it has a rear shell (19, 19').

11. Steering wheel according to Claim 10, characterised in that said rear shell (19) has a lateral access flap (28) allowing the fitting of a mounting piece (23) for fixing the hub (3) of the steering wheel to a steering column (4).

12. Steering wheel according to Claim 10, characterised in that said rear shell (19') has access flaps (33) allowing the fitting of a mounting element for fixing a module (9, 10; 35; 39) carried by said central body (7) to said arms (5).

13. Steering wheel according to any one of Claims 1 to 12, characterised in that the central body (7) adheres at the periphery to the cladding (6) of the rim and arms.

14. Steering wheel according to any one of Claims 1 to 12, characterised in that the central body (7) is moulded on at the periphery by the cladding (6) of the rim and arms.

15. Steering wheel according to any one of Claims 1 to 12, characterised in that the central body (7) and the cladding (6) of the rim and arms are moulded in a single piece.

16. Method for moulding said central body (7) and said external layer (8) of a steering wheel according to Claim 13, characterised by the following steps :
- placing the rim (1) and arms (2) previously clad in a mould adapted to obtaining the said central body (7) in a first material, and to obtaining a lower portion of the external layer (6), situated below the joint face (29), in a second material;
- injecting said first and second materials into the said mould;
- changing the top half-mould for another top half-mould adapted, in cooperation with the bottom half-mould in which the previously obtained assembly remains, to obtaining, in the said second material, the remainder of the said external layer (8), situated above the joint face (29); and
- injecting said second material.

## Patentansprüche

1. Lenkrad für Kraftfahrzeuge, aufweisend ein Gestell, eine Ummantelung, in der das Gestell angeordnet ist, eine äußere Schicht, die die Ummantelung verkleidet, und außerdem einen zentralen Körper, der eine vordere Seite aufweist und am Umfang mit der Ummantelung verbunden ist, in der die Felge und die Äste des Gestells angeordnet sind, dadurch gekennzeichnet, daß die eine äußere Schicht (8; 8') die vordere Seite des zentralen Körpers (7) und die Ummantelung (6; 6'; 6A, 6B) kontinuierlich verkleidet.

2. Rad nach Anspruch 1, dadurch gekennzeichnet, daß der zentrale Körper (7) und die Ummantelung (6; 6'; 6A, 6B) aus einem relativ steifen Thermoplast sind und die äußere Schicht (8) aus einem relativ biegsamen Thermoplast ist.

3. Rad nach Anspruch 1, dadurch gekennzeichnet, daß die Ummantelung (6; 6'; 6A, 6B) und der zentrale Körper (7) aus einem relativ steifen Thermoplast sind und die äußere Schicht (8') aus Polyurethanschaum ist.

4. Rad nach mindestens einem der Ansprüche 1 bis 3, dadurch gekennzeichnet, daß es ein Airbagmodul (9, 10) aufweist, das vom zentralen Körper (7) getragen wird.

5. Rad nach mindestens einem der Ansprüche 1 bis 3, dadurch gekennzeichnet, daß es ein Stoßabsorptionsmodul (35; 39) aufweist, das vom zentralen Körper (7) getragen wird.

6. Rad nach Anspruch 5, dadurch gekennzeichnet, daß das Stoßabsorptionsmodul (35) ein Energieabsorptionsmittel aufweist, das aus ebenen deformierbaren Elementen (37, 38) gebildet ist.

7. Rad nach Anspruch 5, dadurch gekennzeichnet, daß das Stoßabsorptionsmodul (39) ein Energieabsorptionsmittel aufweist, das von einem Block (40) aus zellulärem Material gebildet ist.

8. Rad nach mindestens einem der Ansprüche 1 bis 7, dadurch gekennzeichnet, daß es mindestens einen elektrischen Schalter (18) aufweist, der vom zentralen Körper (7) getragen wird.

9. Rad nach mindestens einem der Ansprüche 1 bis 8, dadurch gekennzeichnet, daß es ein Umfangsgestell (1, 2), das in der Ummantelung angeordnet ist, und ein zentrales Gestell (3, 5) aufweist, welche eine Nabe (3) und Äste (5) aufweist, die über die Rückseite mit den Ästen (2) des Umfangsgestells verbunden sind.

10. Rad nach mindestens einem der Ansprüche 1 bis 9, dadurch gekennzeichnet, daß es einen hinteren Rumpf (19, 19') aufweist.

11. Rad nach Anspruch 10, dadurch gekennzeichnet, daß der hintere Rumpf (19) eine Klappe (28) mit seitlichem Zugang aufweist, die das Einsetzen eines Montagestücks (23) ermöglicht, das die Befestigung der Nabe (3) des Rades an einer Lenksäule (4) ermöglicht.

12. Rad nach Anspruch 10, dadurch gekennzeichnet, daß der hintere Rumpf (19') Zugangsklappen (33) aufweist, die das Einsetzen eines Montagestücks ermöglichen, das das Befestigen eines vom zentralen Körper (7) getragenen Moduls (9, 10; 35; 39) an den Ästen (5) ermöglicht.

13. Rad nach mindestens einem der Ansprüche 1 bis 12, dadurch gekennzeichnet, daß der zentrale Körper (7) am Umfang an der Ummantelung (6) der Folge und der Äste haftet.

14. Rad nach mindestens einem der Ansprüche 1 bis 12, dadurch gekennzeichnet, daß der zentrale Körper (7) am Umfang mit der Ummantelung (6) der Felge und der Äste vergossen ist.

15. Rad nach mindestens einem der Ansprüche 1 bis 12, dadurch gekennzeichnet, daß der zentrale Körper (7) und die Ummantelung (6) der Felge und der Äste einstückig vergossen sind.

16. Verfahren zum Gießen des zentralen Körpers (7) und der äußeren Schicht (8) eines Rades nach Anspruch 13, dadurch gekennzeichnet, daß :
- die Felge (1) und die Äste (2), die zuvor ummantelt wurden, in einer Form angeordnet werden, die für die Herstellung des zentralen Körpers (7) aus einem ersten Material und für die Herstellung eines unteren Abschnitts der äußeren Schicht (6), der sich unterhalb der Verbindungsebene (29) befindet, aus einem zweiten Material ausgelegt ist;
- das erste und das zweite Material in die Form eingespritzt wird;
- die obere Halbform gegen eine andere obere Halbform ausgewechselt wird, welche zusammen mit der unteren Halbform, in der die zuvor hergestellte Einheit liegt, für die Herstellung des Rests der äußeren Schicht (8), welche sich oberhalb der Verbindungsebene (29) befindet, aus dem zweiten Material ausgelegt ist; und
- das zweite Material eingespritzt wird.
